# EUROPEAN PATENT SPECIFICATION

(11) **EP 3 872 889 B1**
(45) Date of publication and mention of the grant of the patent: **23.08.2023**
(21) Application number: 20159257.3
(22) Date of filing: 25.02.2020
(51) Int. Cl.: H01M 10/48, H01M 10/42, B60L 50/64, H01M 10/613, H01M 50/502, H01M 10/625, H01M 10/6567, H01M 50/20

(54) **A BATTERY SYSTEM, A METHOD FOR LEAKAGE DETECTION INSIDE A BATTERY SYSTEM AND A VEHICLE INCLUDING A BATTERY SYSTEM**
BATTERIESYSTEM, VERFAHREN ZUR LECKAGEDETEKTION INNERHALB EINES BATTERIESYSTEMS UND FAHRZEUG MIT EINEM BATTERIESYSTEM
SYSTÈME DE BATTERIE, PROCÉDÉ DE DÉTECTION DE FUITE À L'INTÉRIEUR D'UN SYSTÈME DE BATTERIE ET VÉHICULE COMPRENANT UN SYSTÈME DE BATTERIE

(43) Date of publication of application: 01.09.2021
(73) Proprietor: Samsung SDI Co., Ltd., Gyeonggi-do 17084 (KR)
(72) Inventor: Lettner, Markus, 8521 Wettmannstätten (AT); Steßl, Patrick, 8430 Leibnitz / Kaindorf (AT); Fritz, Jürgen, 8020 Graz (AT); Schlick, Michael, 8054 Graz (AT)
(74) Representative: Gulde & Partner

(56) References cited:
- JP-A- 2007 273 353
- KR-A- 20140 037 305
- US-A1- 2013 181 826
- US-A1- 2020 020 995

## Description

### Field of the Invention

The present invention relates to a battery system, a method for leakage detection inside a battery system and a vehicle including at least one battery system.

### Technological Background

In the recent years, vehicles for transportation of goods and people have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a fuel based power generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development. Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

A battery pack is a set of any number of (preferably identical) battery modules. They may be configured in a series, parallel or a mixture of both to deliver the desired voltage, capacity, or power density. Components of battery packs include the individual battery modules, and the interconnectors, which provide electrical conductivity between them.

The mechanical integration of such a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side, for example, by means of bolts passing through the carrier framework of the battery pack. The carrier framework is usually made of aluminum or an aluminum alloy to lower the total weight of the construction.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

To provide thermal control of the battery pack a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting/discharging/dissipating heat from the cells is required. Accordingly, a battery system may comprise a cooling system is used to cool the batteries. A liquid cooling system is commonly used instead of an air cooling system, due to the lower performance of the later as compared to the liquid cooling system. However, the liquid cooling system may always have a risk of a leakage issue, especially if the battery system is not tight. The cooling liquid from the battery module may leak in the battery housing. Hence, the battery housing would be filled-up with the liquid, which is the leaked cooling liquid from the battery module. Furthermore, the cooling liquid is electrically conductive. Thus, when the liquid inside the battery housing reaches a certain level, such that the liquid comes into to contact with the battery module, then safety related issues can occur, such as an insulation fault, electrolysis, release of explosive gases.

EP 2 506 360 A1 discloses a battery pack with a housing comprising battery and a liquid leak detection system comprising conductive wire grids and an open cell foam layer arranged between the conductive wire grids and DE 10 2013 201 411 A1 discloses a housing comprising a sensor, which is designed to detect a leaked liquid within the housing. Moreover, also document JP2007-273353 discloses a battery system comprising a liquid detection system.

It is thus an object of the present invention to overcome or reduce at least some of the drawbacks of the prior art and to provide a battery system that can detect the presence of liquid inside the housing of the battery system.

### Summary of Invention

Embodiments of the present disclosure seek to solve at least one of the problems existing in the prior art to at least some extent. In particular, a battery system for a vehicle is provided. The battery system comprises a housing comprising a housing frame and a base frame, wherein the housing frame and the base frame enclose a housing space; at least one battery module comprising a plurality of battery cells electrically connected to each other by means of a bus bar, wherein the battery module is disposed in the housing space; at least one tray comprising a tray frame and a tray base; and a liquid detection system integrated with a battery management system, wherein the battery management system is adapted to detect a liquid inside the tray by means of the liquid detection system, wherein the liquid detection system comprises a high-voltage conductor, whose first end is connected to the bus bar and whose second end is disposed between the base frame and the tray base. The battery system may further include a cooling system with a cooling liquid, wherein the battery module is adapted to receive the cooling liquid for cooling. The tray frame may be coupled to the base frame, the tray frame and the tray base may be electrically insulated; and the tray base may be located at a predetermined distance from the base frame. Moreover, it further comprises a low-voltage conductor, whose first end is connected to the battery management system and whose second end is disposed between the second end of the high-voltage conductor and the tray base.

According to another aspect of the present invention, a method for leakage detection inside a battery system is provided. The method comprising the following steps:
I. providing the battery system comprising:
   (i) a housing comprising a housing frame and a base frame, wherein the housing frame and the base frame enclose a housing space;
   (ii) a cooling system with a cooling liquid;
   (iii) at least one battery module comprising a plurality of battery cells electrically connected to each other, wherein the battery module is disposed in the housing space, wherein the battery module is adapted to receive the cooling liquid for cooling;
   (iv) at least one tray comprising a tray frame and a tray base; and
   (v) a liquid detection system integrated with a battery management system, wherein the battery management system is adapted to detect a liquid inside the tray by means of the liquid detection system, wherein the liquid detection system comprises a high-voltage conductor, whose first end is connected to the bus bar and whose second end is disposed between the base frame and the tray base; and a low-voltage conductor, whose first end is connected to the battery management system and whose second end is disposed between the second end of the high-voltage conductor and the tray base.
II. monitoring a decline of the cooling liquid inside the cooling system by means of the battery management system;
III. monitoring an increase of the liquid inside the tray by means of the battery management system;
IV. comparing the decline of the cooling liquid inside the cooling system with the increase in the liquid inside the tray by means of the battery management system; and
V. verifying that the liquid inside the tray is the cooling liquid if the decline of the cooling liquid inside the cooling system corresponds to the increase of the liquid inside the tray by means of the battery management system.

According to another aspect of the present invention, a vehicle including at least one battery system as defined above is provided.

The present invention is defined by the features of claims 1 and 11, and relates to a battery system.

Further aspects of the present invention could be learned from the dependent claims or the following description.

### Brief Description of the Drawings

Features will become apparent to those of ordinary skill in the art by describing in detail exemplary embodiments with reference to the attached drawings in which:
Fig. 1 illustrates a schematic perspective view of a battery system with a high-voltage conductor according to the prior art.
Fig. 2 illustrates a schematic perspective view of a battery system with the high-voltage conductor and a low-voltage conductor according to an embodiment;
Fig. 3 illustrates a schematic perspective view of a battery system with a reservoir according to an embodiment;
Fig. 4 illustrates a schematic view of a high-voltage conductor as a portion of a bus bar according to an embodiment;
Fig. 5 illustrates a schematic view of a high-voltage conductor connected to a bus bar according to an embodiment;
Fig. 6 illustrates a flow chart of a method for leakage detection inside a battery system according to an embodiment;
Fig. 7 illustrates a flow chart of a step of the method for leakage detection inside a battery system according to an embodiment;
Fig. 8 illustrates a schematic perspective view of a battery system with the reservoir according to an embodiment;
Fig. 9 illustrates a schematic perspective view of a battery system with the reservoir according to an embodiment; and
Fig. 10 illustrates a schematic perspective view of a battery system with the reservoir according to an embodiment.

### Detailed Description of the invention

Features of the inventive concept and methods of accomplishing the same may be understood more readily by reference to the following detailed description of embodiments and the accompanying drawings. Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described. Unless otherwise noted, like reference numerals denote like elements throughout the attached drawings and the written description, and thus, descriptions thereof will not be repeated. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named as a second element and, similarly, a second element may be named as a first element, without departing from the scope of the present invention.

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. It will also be understood that when a component or an element is referred to as being "above" or "on" another component or element, it can be directly on the other component or element, or intervening components, or elements may also be present. Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

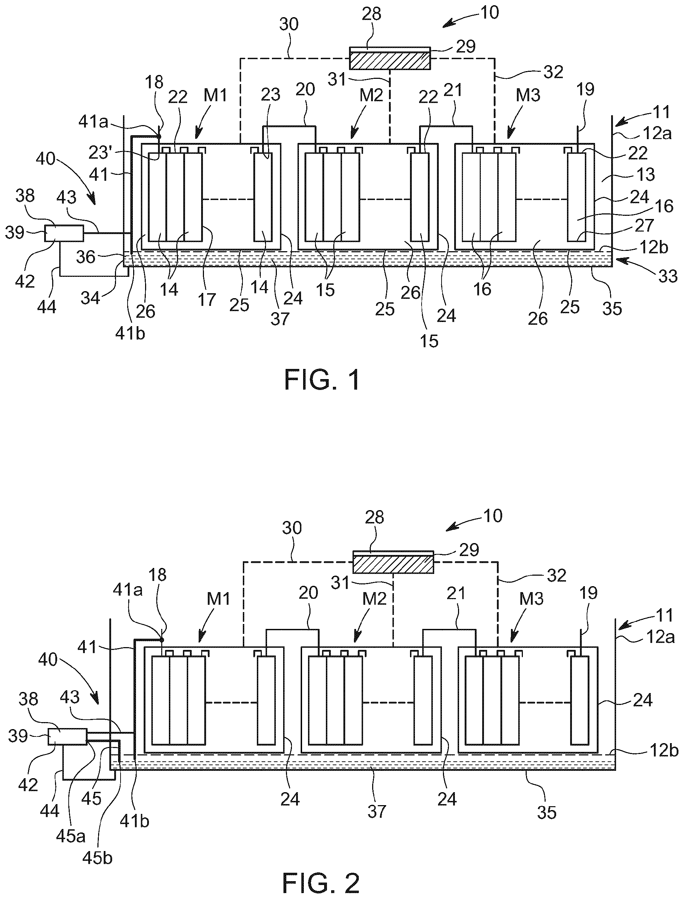

Fig. 1 is a perspective view illustrating a battery system 10 according to the prior art.

The battery system 10 comprises a housing 11 comprising a housing frame 12a and a base frame 12b (depicted by means of a dashed line). The base frame 12b has a rectangular shape and may be constructed of an electrically conductive material such as copper. The housing frame 12a and the base frame 12b enclose a housing space 13. The battery system 10 comprises three battery modules M1, M2 and M3, namely a first battery module M1, a second battery module M2 and a third battery module M3, wherein the battery modules M1, M2 and M3 are disposed in the housing space 13. Each of the battery modules M1, M2 and M3 comprise a module housing 24 and module base 25, respectively, wherein each of the module housing 24 and the module base 25 enclose a corresponding module space 26, respectively. The module base 26 of each of the battery module M1, M2 and M3 is supported by the base frame 12. In other words, the battery modules M1, M2 and M3 are placed on the base frame 12. The module base 25 of each of the battery modules M1, M2 and M3 is coupled to the base frame 12b by means of a mechanical means which may be known to a person with ordinary skill in the art. It is further thinkable that the size of the battery modules M1, M2 and M3 may be adapted such that the battery modules M1, M2 and M3 are fittingly disposed in the housing space 13 and are supported by the housing frame 12a and the base frame 12b of the battery system 10.

The first battery module M1 comprises a plurality of battery cells 14, the second battery module M2 comprises a plurality of battery cells 15 and the third battery module M3 comprises a plurality of battery cells 16. In other words, the plurality of battery cells 14, 15 and 16 are disposed in the respective module space 26 of each of the corresponding battery modules M1, M2 and M3. Each of the plurality of battery cells 14, 15 and 16 of the respective battery modules M1, M2 and M3 are electrically connected to each other by means of a bus bar. According to an exemplary embodiment, the plurality of cells 14 of the first battery module M1 are connected by a bus bar 18 and the plurality of cells 16 of the third battery module M3 are connected by a bus bar 19. The plurality of cells 14 of the first battery module M1 are electrically connected by the plurality of cells 15 of the second battery module M2 by means of a bus bar 20. The plurality of cells 15 of the second battery module M2 are electrically connected by the plurality of cells 16 of the third battery module M3 by means of a bus bar 21. In one exemplary embodiment, the bus bars 18, 19, 20 and 21 are constructed of aluminum. Of course, in alternative embodiments, the bus bars 18, 19, 20 and 21 could be constructed of other metals or metal alloys or electric conductive material known to a person skilled in the art. Moreover, each of the bus bars 18, 19, 20 and 21 could be constructed of different materials independent of each other.

The battery cell 14, 15 and 16 according to an embodiment may include an electrode assembly (not shown in figures), and a case 17 for accommodating the electrode assembly, the case 17 containing an electrolyte. The electrode assembly may be formed as a jelly roll type electrode assembly by spirally winding a positive electrode and a negative electrode with a separator therebetween (not shown in figures). The electrolyte may be made of a lithium salt, such as LiPF6 or LiBF4 with an organic solvent, such as EC, PC, DEC, EMC, or EMC. The electrolyte solution may be in a liquid, solid, or gel state.

The battery cell 14, 15 and 16 may also include a cap assembly 22 for sealing an opening of the case 17. The battery cell 14, 15 and 16 is described as a non-limiting example of a lithium ion secondary battery configured to have a prismatic shape (or rectangular). The case 17 may be configured to have a substantially cuboidal shape, and an opening may be formed at one side thereof. The case 17 may be formed of a metal, such as aluminum.

The case 17 may further comprise a base 27, such that the base 27 and the side surfaces of the battery cell 14, 15 and 16 form a space for accommodating the electrode assembly and the electrolyte. Furthermore, the case 17 is hermetically sealed by the cap assembly 22, wherein the base 27 and the cap assembly 22 are parallel to each other. The cap assembly 22 is provided with positive and negative electrode terminals 23 and 23' having different polarities, and a vent (not shown in figures). The vent is a safety means of the battery cell 14, 15 and 16 which acts as a passage through which gas generated in the battery cell 14, 15 and 16 is exhausted to the outside of the battery cell 14, 15 and 16.

The battery system 10 comprises a cooling system 28 with a cooling liquid 29, wherein the cooling system 28 is configured to provide the cooling liquid 29 along respective paths 30, 31 and 32 to each of the battery modules M1, M2 and M3 for cooling the respective battery modules M1, M2 and M3. The battery module M1, M2 and M3 is adapted to receive the cooling liquid 29 for cooling, such that the cooling liquid 29 can absorb heat energy that may be released by the battery cells 14, 15 and 16 during the operation of the battery system 10.

The battery system 10 comprises a tray 33. The tray 33 comprises a tray frame 34 and a tray base 35. The tray frame 34 is coupled to the tray base 35 by means of welding or a mechanical means which may be known to a person with ordinary skill in the art. The tray frame 34 and the tray base 35 are electrically insulated. The tray base 35 is located at a predetermined distance from the base frame 12b, such that the tray frame 34 and the tray base 35 enclose a tray space 36. The tray space 36 is configured to receive a liquid 37, which may be a portion of the cooling liquid 29, which may leak from least one of the battery modules M1, M2 and M3 and get collected in the tray space 36. The base frame 12b may be in form of a frame skeleton structure (not shown in figures), such that the base frame 12b includes an outer perimeter to support the module base 25 of the respective battery modules M1, M2 and M3 and a hollow space in between in order to enable a reduction of weight of the battery system 10 and to enable the passage of the liquid 37 through, wherein the liquid 37 may be leaked from the battery modules M1, M2 and M3 into the tray space 36. Furthermore, the base frame 12b may be in form of a grid, which is configured to support the battery modules M1, M2 and M3 which are placed on it and also to enable the passage of the liquid 37 through, wherein the liquid 37 may be leaked from the battery modules M1, M2 and M3 into the tray space 36. The tray frame 34 may be coupled to the base frame 12b by means of mechanical coupling such as bolts and rivets or may be welded or by mechanical means which may be known to the ordinary person skilled in the art. The tray frame 34 and the babe frame 12b may be coupled such that they can be separated when required.

The battery system 10 may be integrated in a vehicle (not shown in figures) which may be electrically driven, wherein the tray base 35 may be coupled to a chassis of the vehicle. In another embodiment (not shown in figures), the base frame 12b may be coupled to the chassis of the vehicle on one side of the chassis, such that the housing 11 of the battery system 10 is disposed on the chassis. The tray frame 35 may be coupled to the other side of the chassis, such that the liquid 37 which may be leaked from at least one of the battery modules M1, M2 and M3 is collected inside the tray space 36. Furthermore, the battery system 10 may comprise more than one trays 33 which our coupled to the housing 11. This is of advantage because this can allow the predetermined distance between the tray base 53 and the base frame 12b to be reduced, in order to receive a same amount of leaked liquid 37 as compared to that by a single tray 33.

The battery system 10 comprises a battery management system 38 which includes a microprocessor 39 and is configured to manage the charging/discharging of the battery system 10. Furthermore, the battery system 10 comprises a liquid detection system 40 which is integrated with the battery management system 38. The liquid detection system 40 may be integrated in the battery management system 38, such that the liquid detection system is partially or fully a part of the battery management system 38. The battery management system 38 is adapted to detect the liquid 37 inside the tray 33 by means of the liquid detection system 40. In other words, when there is a leakage from one of the battery modules M1, M2 and M3, such that the cooling liquid 29 therein is leaked out as the liquid 37 into the tray 33, then the liquid detection system 40 is adapted to detect a variation in a characteristic, for example resistance, in the battery system 10 and send a signal to the battery management system 38. Upon receiving the signal from the liquid detection system 40, the battery management system 38 can detect the liquid 37 inside the tray 33.

As shown in Figures, the liquid detection system 40 is integrated with the battery management system 38. The liquid detection system 40 comprises a high-voltage conductor 41 which lies outside the battery management system 38. A first end 41a of the high voltage conductor 41 is connected to the bus bar 18 and a second end 41b of the high-voltage conductor 41 is disposed between the base frame 12b and the tray base 35. In other words, the high-voltage conductor 41 is electrically connected to an electrode of one of the battery cells 14, 15 and 16 at the first end 41a and at least partially arranged below the module base 26 of the battery modules M1, M2 and M3 at the second end 41b.

The liquid detection system 40 comprises a resistance monitoring system 42 configured to monitor resistance between the high-voltage conductor 41 and the tray base 35. As shown in Figs. 1 to 3 and 8 to 10, the resistance monitoring system 42 of the liquid detection system 40 is a part of the battery management system 38. The resistance monitoring system 42 is electrically coupled to the high-voltage conductor 41 by means of an electrical conductor 43. The resistance monitoring system 42 is electrically coupled to the tray base 35 by means of an electrical conductor 44. The resistance monitoring system 42 is configured to output a resistance signal indicative of a resistance level between the high-voltage conductor 41 and the tray base 35. In the absence of a leakage, that is the liquid 37, the resistance level between the high-voltage conductor 41 and the tray base 35 may be of a value corresponding to the value of an isolation resistance. In the case of a leakage of the cooling liquid 29 from at least one of the batter modules M1, M2 and M3, the liquid 37 collected inside the tray 33 may reach a level corresponding to a distance of the position of the second end 41b of the high-voltage conductor 41 from the tray base 35. In this case, the liquid 37 forms a conductive path, due to which the resistance level between the high-voltage conductor 41 and the tray base 35, reduces. Depending on the position of the second end 41b of the high-voltage conductor 41, a threshold resistance value is experimentally or empirically determined. When the resistance monitoring system 42 outputs the resistance signal an instance of time, then at that instance of time, the microprocessor 39 determines if the resistance level based on the outputted resistance signal is less than or equal to the threshold resistance value. In case, the level of the collected liquid 37 has not reached the level corresponding to the distance of the position of the second end 41b of the high-voltage conductor 41 from the tray base 35, that is, that the liquid 37 has not touched the second end 41b, then the resistance level determined by the microprocessor 39 is greater than the threshold resistance value. Hence, a presence of the liquid 37 inside the tray 33 is not detected. However, at a later instant of time, when a predetermined amount of the cooling liquid 29 is leaked from at least one of the battery modules M1, M2 and M3. Then the resistance level determined by the microprocessor 39 from the resistance signal outputted by the resistance monitoring system 42 at that instant of time is less than or equal to the threshold resistance value. Hence, the liquid 37 inside the tray 33 can be detected.

However, other kinds of methodologies for the detection of the liquid 37 inside the tray 33 by detection on the basis of a variation of a characteristic in the battery system 10 which may be known to an ordinary person skilled in the art can be adopted. For example, the high-voltage conductor 41 is connected to the bus bar 18, 19, 20 and 21, and have a voltage potential corresponding to the voltage potential of the bus bar 18, 19, 20, 21, whereas the tray base 35 has same ground potential as the battery management system 38. This enables a predetermined voltage potential difference between the high-voltage conductor 41 and the tray base 35. When there is no liquid 37 between the high-voltage conductor 41 and the tray base 35, there may be no electrical connection between the high-voltage conductor 41 and the tray base 35. Hence, a signal based on a predetermined resistance value, which may be set corresponding to no electrical connection between the high-voltage conductor 41 and the tray base 35, may be sent to the battery management system 38. Similarly, a signal based on a threshold current flow value due to no electrical connection between the high-voltage conductor 41 and the tray base 35, may be sent by the liquid detection system 40 to the battery management system 38. Based on which, the battery management system 38 may determine that no liquid 37 is present in the tray 33.

When the liquid 37 inside the tray 33 raises to a level such that it touches the at least the second end 41b of the high-voltage conductor 41, then an electrical connection between the high-voltage conductor 41 and the tray base 33 is established. Thus, the signal based on a variation of the resistance value, which may be set corresponding to the established electrical connection between the high-voltage conductor 41 and the tray base 35 due to the liquid 37, may be sent to the battery management system 38. Similarly, the signal based on a variation in the current flow value due to the established electrical connection between the high-voltage conductor 41 and the tray base 35 due to the liquid 37, may be sent by the liquid detection system 40 to the battery management system 38. Based on which, the battery management system 38 may detect that the liquid 37 inside the tray 33.

In order to be able to detect the presence of the liquid 37 inside the tray 33 at an earlier stage, that is at a level lower than the position of the second end 41b, the liquid detection system 40 further comprises a low-voltage conductor 45, whose first end 45a is connected to the battery management system 38 and whose second end 45b is disposed between the second end 41b of the high-voltage conductor 41 and the tray base 35. In other words, a detection of the presence of the liquid 37 which is leaked from at least one of the battery modules M1, M2 and M3 is enabled earlier, that is when the level of the liquid 37 collected in tray 33 is lower than the position of the second end 41b. Thus, the presence of the liquid 37 at level further away from the base 26 of the battery modules M1, M2 and M3 is detected by the battery management system 38 by means of the low-voltage conductor 45 of the liquid detection system 40. Hence, by means of such redundant sensors, that is the additional low-voltage conductor 45 along with the high-voltage conductor 41, a higher reliability for the detection of the liquid 37 inside the tray 33 can be achieved.

Furthermore, the resistance monitoring system 42 is configured to monitor resistance between the low-voltage conductor 45 and the tray base 35. The resistance monitoring system 42, which is integrated with the battery management system 38, is electrically coupled to the low-voltage conductor 45, since the first end 45a is connected to the battery management system 38. The resistance monitoring system 42 is electrically coupled to the tray base 35 by means of the electrical conductor 44. The resistance monitoring system 42 is configured to output a resistance signal indicative of a resistance level between the low-voltage conductor 45 and the tray base 35. In the absence of a leakage, that is the liquid 37, the resistance level between the low-voltage conductor 45 and the tray base 35 may be of a value corresponding to a predefined set value. In the case of a leakage of the cooling liquid 29 from at least one of the batter modules M1, M2 and M3, the liquid 37 collected inside the tray 33 may reach a level corresponding to a distance of the position of the second end 45b of the low-voltage conductor 45 from the tray base 35. In this case, the liquid 37 forms a conductive path, due to which the resistance level between the low-voltage conductor 45 and the tray base 35, reduces. When the resistance monitoring system 42 outputs the resistance signal at an instance of time, then at that instance of time, the microprocessor 39 determines if the resistance level based on the outputted resistance signal is less than or equal to the predefined set value. In case, the level of the collected liquid 37 has not reached the level corresponding to the distance of the position of the second end 45b of the low-voltage conductor 45 from the tray base 35, that is, that the liquid 37 has not touched the second end 45b, then the resistance level determined by the microprocessor 39 is greater than the predefined set value. Hence, a presence of the liquid 37 in the tray 33 is not detected. However, at a later instant of time, when a predetermined amount of the cooling liquid 29 is leaked from at least one of the battery modules M1, M2 and M3. Then the resistance level determined by the microprocessor 39 from the resistance signal outputted by the resistance monitoring system 42 at that instant of time is less than or equal to the threshold resistance value. Hence, the liquid 37 inside the tray 33 can be detected. However, other kinds of methodologies for the detection of the liquid 37 inside the tray 33 by detection on the basis of a variation of a characteristic in the battery system 10 which may be known to an ordinary person skilled in the art can be adopted.

In one embodiment, the battery management system 38 and the tray 33 may be connected to the same ground potential, wherein the battery management system 38 is adapted to detect the liquid 37 between the low-voltage conductor 45 and the tray base 35. Furthermore, the low-voltage conductor 45 may comprise a resistor.

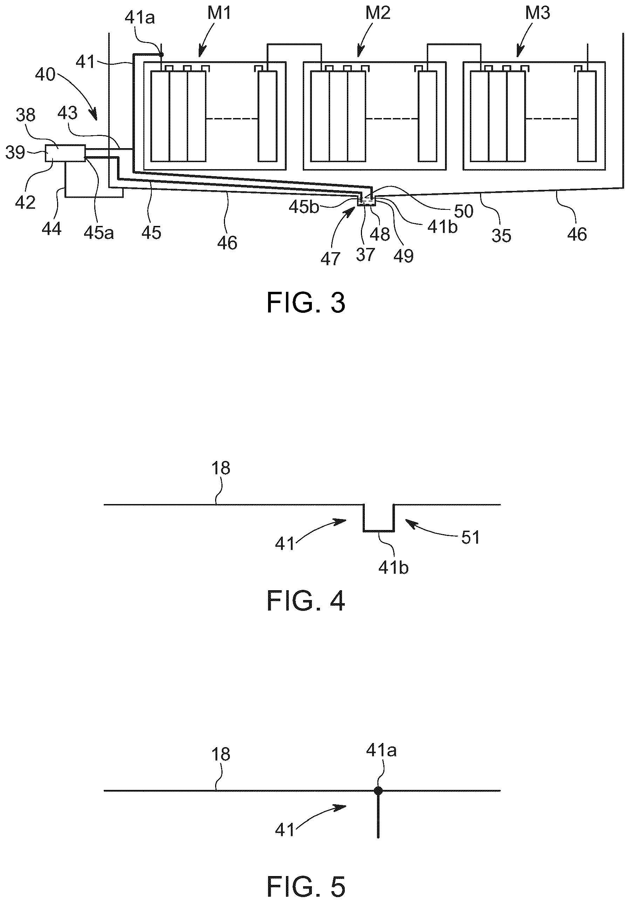

As shown in Fig. 3, according to an embodiment, the tray base 35 comprises a sloped surface 46. The tray base 35 with the sloped surface 46 comprises at least one reservoir 47, for example one reservoir 47. The reservoir 47 is located at the lowest point on the slope of the sloped surface 46, such that incase of a leakage of the cooling liquid 29, the liquid 37 is flows directly first into the reservoir 47 due to the gravitational force and is collected inside the reservoir 47. The reservoir 47 is in form of cylindrical volume comprising a reservoir base 48 and reservoir wall 49. Such that the reservoir base 48 and the reservoir wall 49 enclose a reservoir space 50, in which the leaked liquid 37 is first collected after the leakage. The reservoir 47 includes an opening end at the top, through which the leaked liquid 37 enters into the reservoir space 50. In other words, the tray base 35 includes the sloped surface 46 instead of a plane surface, and the reservoir 47, so that a detection of the liquid 37 can be enabled for a much lesser leakage of the liquid 37 from at least one of the battery modules M1, M2 and M3.

The second end 41b of the high-voltage conductor 41 and the second end 45b of the low-voltage conductor 45 are disposed inside the reservoir space 50, wherein the second end 45b of the low-voltage conductor 45 is disposed between the second end 41b of the high-voltage conductor 41 and the reservoir base 48. This is of advantage, because this enables an earlier detection of leaked liquid 37, even for a small amount of predetermined volume of leakage liquid 37, since the leaked liquid 37 flows directly inside the reservoir 47 and hence, is first detected by the low-voltage conductor 45 followed by the high-voltage conductor 41 incase of a further leakage. As a whole, this advantageous embodiment enables an early detection of the leakage of a small amount of the liquid 37 inside the reservoir 47 by the battery management system 38 using the liquid detection system 40. Furthermore, the second end 41b may be disposed at a much higher level outside the reservoir 47, that closer to the base frame 12b, whereas the second end 45b of the low-voltage conductor 45 may be disposed inside the reservoir space 50.

The reservoir 47 may comprise at least one optically detectable surface. In other words, the reservoir base 48 or at least a part of the reservoir wall 49 comprises an optically detectable surface or is at least partially transparent. This is of advantage, because a detection of the liquid 37 which may be leaked from at least one battery modules M1, M2 and M3 can be achieved by means of simple optical inspection of the at least one optically detectable surface of the reservoir 47. For example, an optical inspection of the tightness of the cooling system 28 or the detection of the leakage liquid 37 in the reservoir 47 can be carried out using an endoscopic camera in a simple and cost effective manner. In case, the optically detectable surface of the reservoir 47 is dry, then the cooling system may be considered to be tight or without any leakage. Furthermore, the tray base 33 may comprise a drainage plug (not shown in figures). It is thinkable, that the tray base 33 comprises an opening which may be closed by means of the drainage plug and is connected to a pump, which may be connected to the battery management system 38. In case when the liquid 37 inside the tray is detected by the battery management system 38, then the battery management system 38 may regulate the opening of the drainage plug, so that the liquid 37 is sucked out of the tray 33 by the pump. However, further mechanisms for the removal of the liquid 37 upon detection of the liquid 37 inside the tray 33 can be adopted by an ordinary person skilled in the art.

According to an embodiment shown in fig. 4 and figs. 8 to 10, the high-voltage conductor 41 is a portion 51 of the bus bar 18. In other word, the bus bar 18 comprises a portion which is adapted in form of a dented structure, which may be lowest point of the corresponding battery module M1, such the portion 51 is configured to function as the high-voltage conductor 41 of the liquid detection system 40. The portion 51 of the bus bar 18 comprises the second end 41b, which is the lowest point of the battery module M1, such that the second 41b would be the first point of the battery module M1 that would come in contact with leaked liquid 37 in the case of a leakage of cooling liquid 29 from at least one of the battery modules M1 and M2. Fig. 5 depicts an embodiment, according to which, the high-voltage conductor 41 is in a form of a sensor wire connected to the bus bar 18, such that the first end 41a of the high-voltage conductor 41 is coupled to the bus bar 18, whereas the second end 41b is disposed between the base frame 12b and tray base 35, as shown in figs. 1 and 2, or the second end 41b is disposed in the reservoir space 50, as shown in fig. 3.

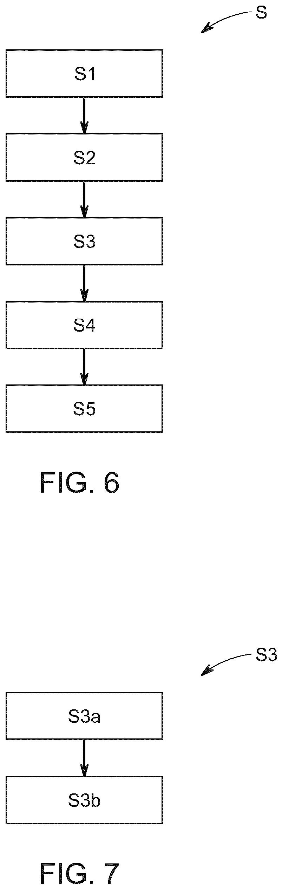

Fig. 6 discloses a flow chart of a method S for leakage detection inside a battery system 10 according to an embodiment.

The method S comprises a first step S1, which includes providing the battery system 10 comprising: a housing 11 comprising a housing frame 12a and a base frame 12b, wherein the housing frame 12a and the base frame 12b enclose a housing space 13; a cooling system 28 with a cooling liquid 29; at least one battery module M1, M2 and M3 comprising a plurality of battery cells 17, 15 and 16 electrically connected to each other, wherein the battery module M1, M2 and M3 is disposed in the housing space 13, wherein the battery module M1, M2 and M3 is adapted to receive the cooling liquid 29 for cooling; at least one tray 33; a battery management system 38; and a liquid detection system 40. The at least one tray 33 comprises a tray frame 34 and a tray base 35, wherein the tray frame 34 is coupled to the base frame 12b; the tray frame 34 and the tray base 35 are electrically insulated; and the tray base 35 is located at a predetermined distance from the base frame 12b. The liquid detection system 40 is connected to the battery management system 38, wherein the battery management system 38 is adapted to detect a liquid 37 inside the tray 33 by means of the liquid detection system 40. The liquid detection system 40 comprises a high-voltage conductor 41, whose first end 41a is connected to the bus bar 18, 19, 20 and 21 and whose second end 41b is disposed between the base frame 12b and the tray base 35; and a low-voltage conductor, whose first end is connected to the battery management system and whose second end is disposed between the second end of the high-voltage conductor and the tray base.

The method S comprises a second step S2, which includes monitoring a decline of the cooling liquid 29 inside the cooling system 28 by means of the battery management system 38.

The method S comprises a third step S3, which includes monitoring an increase of the liquid 37 inside the tray 33 by means of the battery management system 38.

The method S comprises a fourth step S4, which includes comparing the decline of the cooling liquid 29 inside the cooling system 28 with the increase in the liquid 37 inside the tray 33 by means of the battery management system 38.

Lastly, the method S comprises a fifth step S5, which includes verifying that the liquid 37 inside the tray 33 is the cooling liquid 29, if the decline of the cooling liquid 29 inside the cooling system 28 corresponds to the increase of the liquid 37 inside the tray 33, by means of the battery management system 38.

Fig. 7 depicts a flow chart of the third step S3 of the method S for detecting the liquid 37 inside the battery system 10 according to an embodiment.

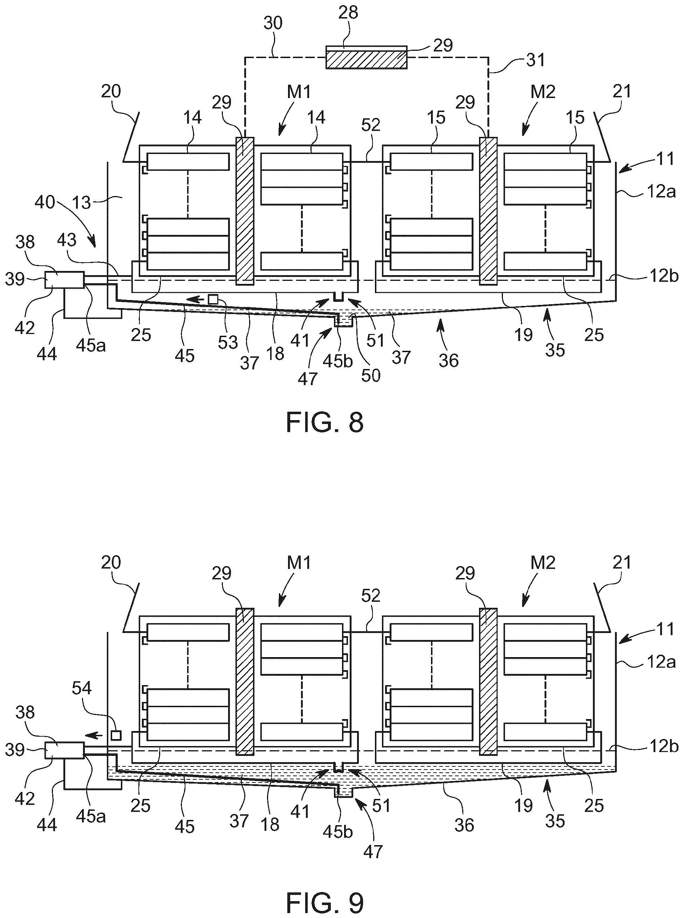

The third step S3 for monitoring the increase of the liquid 37 inside the tray 33 includes a first sub-step S3a, in which a low-voltage conductor 45 sends a first signal 53, as shown in fig. 8, to the battery management system 38 upon a detection of the liquid 37 inside the tray 33.

The third step S3 for monitoring the increase of the liquid 37 inside the tray 33 includes a second sub-step S3b, in which the high-voltage conductor 41 sends a second signal 54, as shown in fig. 9, to the battery management system 38 upon a detection of the liquid 37 inside the tray 33.

According to the embodiments shown in figs. 8 to 10, the battery system 10 comprises two battery modules M1 and M2 in the housing space 13, each comprising the plurality of battery cells 14 and 15, respectively. The plurality of battery cells 14 are electrically connected to each other on an upper side of the battery system 10 by the bus bar 20, whereas the plurality of battery cells 14 are electrically connected to each other on a lower side of the battery system 10 by the bus bar 18. The plurality of battery cells 15 are electrically connected to each other on the upper side of the battery system 10 by the bus bar 21, whereas the plurality of battery cells 15 are electrically connected to each other on the lower side of the battery system 10 by the bus bar 19. The plurality of battery cells 14 of the battery module M1 are electrically connected with the plurality of battery cells 15 of the battery module M2 by means of a bus bar 52. The cooling system 28 is configured to provide the cooling liquid 29 along respective paths 30 and 31 to each of the battery modules M1 and M2 for cooling the respective battery modules M1 and M2. The battery module M1 and M2 is adapted to receive the cooling liquid 29 for cooling, such that the cooling liquid 29 can absorb heat energy that may be released by the battery cells 14 and 16 during the operation of the battery system 10. The high-voltage conductor 41 is the portion 51 of the bus bar 18. As per the first sub-step S3a of the third step S3 of the method S for monitoring the increase in the liquid 37 inside the tray 33, in which the low-voltage conductor 45, whose second end 45b is disposed within the reservoir space 50, sends the first signal 53 to the battery management system 38 upon a detection of the liquid 37 inside the reservoir 47. Hence, the low-voltage conductor 45 sends a pre-warning signal to the battery management system 38 regarding the leakage of at least one of the battery modules M1 and M2.

Incase, when the leakage of the cooling liquid 29 further continues from at least one of the battery modules M1 and M2, then the level of the liquid 37 collected in the tray 33 increases, such that at a particular instant of time, the liquid 37 reaches the second end 41b of the high-voltage conductor 41. In other words, the liquid 37 reaches the bus bar 18 of the battery module 18. At that instant, as per the second sub-step S3b of the third step S3 of the method S for monitoring the increase in the liquid 37 inside the tray 33, the high-voltage conductor 41 sends the second signal 54 to the battery management system 38 upon a detection of the liquid 37 inside the tray 33. Hence, the battery management system 38 detects an isolation fault. The total amount of cooling liquid 29 in the battery system 10 may be known. Both the low-voltage conductor 45 and the high-voltage conductor 41 lead to the detection of the liquid 37 at different levels inside the tray 33. The level of leakage depends on the predetermined distance of respective second end 41b and 45b from the tray base 35. If the amount of the cooling liquid 29 in the battery system 10 is lower than the volume between the positions of the second 41b and 45b of the respective high-voltage conductor 41 and the low-voltage conductor 45, than electrolysis of the cooling liquid may be considered to have occurred.

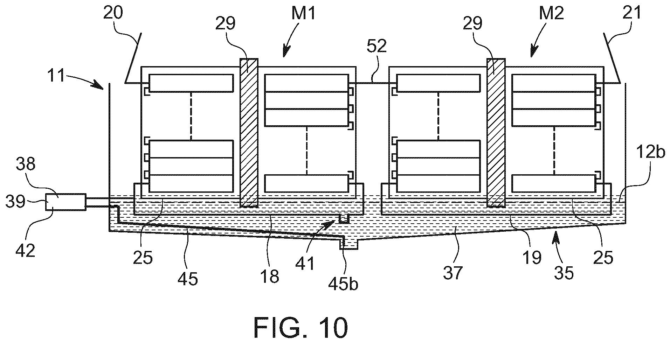

Fig. 10 shows that the liquid 37 reaches a further higher level, such that is surpasses the position of the module base 25 of the respective battery modules M1 and M2. At such levels of the liquid 37, massive electrolysis may occur which may lead to producing detonating gases, which may damage the whole battery system 10. Hence, an early leakage detection of the cooling liquid 29 from at least one of the battery modules M1 and M2 is necessary, which can be realized by the present invention.

The invention further discloses a vehicle including at least one battery system 10 for leakage detection inside the at least one battery system 10.

### Reference signs

- 10: battery system
- 11: housing
- 12a: housing frame
- 12b: base frame
- 13: housing space
- 14: battery cells
- 15: battery cells
- 16: battery cells
- 17: case
- 18: bus bar
- 19: bus bar
- 20: bus bar
- 21: bus bar
- 22: cap assembly
- 23: positive electrode terminal
- 23': negative electrode terminal
- 24: module housing
- 25: module base
- 26: module space
- 27: base
- 28: cooling system
- 29: cooling liquid
- 30: path
- 31: path
- 32: path
- 33: tray
- 34: tray frame
- 35: tray base
- 36: tray space
- 37: liquid
- 38: battery management system
- 39: microprocessor
- 40: liquid detection system
- 41: high-voltage conductor
- 41a: first end
- 41b: second end
- 42: resistance monitoring system
- 43: electrical conductor
- 44: electrical conductor
- 45: low-voltage conductor
- 45a: first end
- 45b: second end
- 46: sloped surface
- 47: reservoir
- 48: reservoir base
- 49: reservoir wall
- 50: reservoir space
- 51: portion
- 52: bus bar
- 53: first signal
- 54: second signal
- M1: battery module
- M2: battery module
- M3: battery module
- S: method
- S1: first step
- S2: second step
- S3: third step
- S3a: first sub-step
- S3b: second sub-step
- S4: fourth step
- S5: fifth step

## Claims

1. A battery system (10) comprising:
(i) a housing (11) comprising a housing frame (12a) and a base frame (12b), wherein the housing frame (12a) and the base frame (12b) enclose a housing space (13);
(ii) at least one battery module (M1, M2, M3) comprising a plurality of battery cells (14, 15, 16) electrically connected to each other by means of a bus bar (18, 19, 20, 21), wherein the battery module (M1, M2, M3) is disposed in the housing space (13);
(iii) at least one tray (33) comprising a tray frame (34) and a tray base (35); and
(iv) a liquid detection system (40) integrated with a battery management system (38), wherein the battery management system (38) is adapted to detect a liquid (37) inside the tray (33) by means of the liquid detection system (40), wherein the liquid detection system (40) comprises a high-voltage conductor (41), whose first end (41a) is connected to the bus bar (18, 19, 20, 21) and whose second end (41b) is disposed between the base frame (12b) and the tray base (35)
**characterized in that** the liquid detection system (40) further comprises a low-voltage conductor (45), whose first end (45a) is connected to the battery management system (38) and whose second end (45b) is disposed between the second end (41b) of the high-voltage conductor (41) and the tray base (35).

2. The battery system (10) according to claim 1, wherein the liquid detection system (40) comprises a resistance monitoring system (42) configured to monitor resistance between the high-voltage conductor (41) and the tray base (35).

3. The battery system (10) according to claim 2, wherein the resistance monitoring system (42) is configured to monitor resistance between the low-voltage conductor (45) and the tray base (35).

4. The battery system (10) according to any one of the preceding claims, wherein the high-voltage conductor (41) is a portion of the bus bar (18, 19, 20, 21).

5. The battery system (10) to any one of the preceding claims, wherein the battery management system (38) and the tray (33) are connected to the same ground potential, wherein the battery management system (38) is adapted to detect the liquid (37) between the low-voltage conductor (45) and the tray base (35).

6. The battery system (10) to any one of the preceding claims, wherein the tray base (35) comprises a sloped surface (46).

7. The battery system (10) according to claim 6, wherein the tray base (35) with the sloped surface (46) comprises at least one reservoir (47), wherein the battery management system (38) is adapted to detect the liquid (37) inside the reservoir (47) by means of the liquid detection system (40).

8. The battery system (10) according to claim 7, wherein the second end (41b) of the high-voltage conductor (41) and the second end (45b) of the low-voltage conductor (45) are disposed inside the reservoir (47), wherein the second end (45b) of the low-voltage conductor (45) is disposed between the second end (41b) of the high-voltage conductor (41) and a reservoir base (48).

9. The battery system (10) according to claims 7 or 8, wherein the reservoir (47) comprises at least one optically detectable surface.

10. The battery system (10) according to any one of claims 7 to 9, wherein the reservoir (47) comprises a drainage plug.

11. A method (S) for leakage detection inside a battery system (10) comprising the following steps:
I. (S1) providing the battery system (10) comprising:
(i) a housing (11) comprising a housing frame (12a) and a base frame (12b), wherein the housing frame (12a) and the base frame (12b) enclose a housing space (13);
(ii) a cooling system (28) with a cooling liquid (29);
(iii) at least one battery module (M1, M2, M3) comprising a plurality of battery cells (14, 15, 16) electrically connected to each other by means of a bus bar (18, 19, 20, 21), wherein the battery module (M1, M2, M3) is disposed in the housing space (13), wherein the battery module (M1, M2, M3) is adapted to receive the cooling liquid (29) for cooling;
(iv) at least one tray (33) comprising a tray frame (34) and a tray base (35); and
(v) a liquid detection system (40) integrated with a battery management system (38), wherein the battery management system (38) is adapted to detect a liquid (37) inside the tray (33) by means of the liquid detection system (40), wherein the liquid detection system (40) comprises a high-voltage conductor (41), whose first end (41a) is connected to the bus bar (18, 19, 20, 21) and whose second end (41b) is disposed between the base frame (12b) and the tray base (35); and a low-voltage conductor, whose first end is connected to the battery management system and whose second end is disposed between the second end of the high-voltage conductor and the tray base;
II. (S2) monitoring a decline of the cooling liquid (29) inside the cooling system (28) by means of the battery management system (38);
III. (S3) monitoring an increase of the liquid (37) inside the tray (33) by means of the battery management system (38);
IV. (S4) comparing the decline of the cooling liquid (29) inside the cooling system (28) with the increase in the liquid (37) inside the tray (33) by means of the battery management system (38); and
V. (S5) verifying that the liquid (37) inside the tray (33) is the cooling liquid (29), if the decline of the cooling liquid (29) inside the cooling system (28) corresponds to the increase of the liquid (37) inside the tray (33) by means of the battery management system (38).

12. The method (S) according to claim 11, wherein the step (S3) for monitoring the increase of the liquid (37) inside the tray (33) includes a first sub-step (S3a), in which the low-voltage conductor (45) sends a first signal to the battery management system (38) upon a detection of the liquid (37) inside the tray (33).

13. The method (S) according to claims 11 or 12, wherein the step (S3) for monitoring the increase of the liquid (37) inside the tray (33) includes a second sub-step (S3b), in which the high-voltage conductor (41) sends a second signal to the battery management system (38) upon a detection of the liquid (37) inside the tray (33).

14. A vehicle including at least one battery system (10) according to any one of the claims from 1 to 10.

## Patentansprüche

1. Batteriesystem (10), das Folgendes umfasst:
(i) ein Gehäuse (11), das einen Gehäuserahmen (12a) und einen Basisrahmen (12b) umfasst, wobei der Gehäuserahmen (12a) und der Basisrahmen (12b) einen Gehäuseraum (13) umschließen;
(ii) mindestens ein Batteriemodul (M1, M2, M3), das eine Vielzahl von Batteriezellen (14, 15, 16) umfasst, die über eine Sammelschiene (18, 19, 20, 21) elektrisch miteinander verbunden sind, wobei das Batteriemodul (M1, M2, M3) in dem Gehäuseraum (13) angeordnet ist;
(iii) mindestens eine Wanne (33), die einen Wannenrahmen (34) und eine Wannenbasis (35) umfasst; und
(iv) ein Flüssigkeitsdetektionssystem (40), das in ein Batteriemanagementsystem (38) integriert ist, wobei das Batteriemanagementsystem (38) dazu ausgelegt ist, eine Flüssigkeit (37) im Inneren der Wanne (33) mittels des Flüssigkeitsdetektionssystems (40) zu erfassen, wobei das Flüssigkeitsdetektionssystem (40) einen Hochspannungsleiter (41) umfasst, dessen erstes Ende (41a) mit der Sammelschiene (18, 19, 20, 21) verbunden ist und dessen zweites Ende (41b) zwischen dem Basisrahmen (12b) und der Wannenbasis (35) angeordnet ist
**dadurch gekennzeichnet, dass** das Flüssigkeitsdetektionssystem (40) außerdem einen Niederspannungsleiter (45) umfasst, dessen erstes Ende (45a) mit dem Batterieverwaltungssystem (38) verbunden ist und dessen zweites Ende (45b) zwischen dem zweiten Ende (41b) des Hochspannungsleiters (41) und der Wannenbasis (35) angeordnet ist.

2. Batteriesystem (10) nach Anspruch 1, wobei das Flüssigkeitsdetektionssystem (40) ein Widerstandsüberwachungssystem (42) umfasst, das so konfiguriert ist, dass es den Widerstand zwischen dem Hochspannungsleiter (41) und der Wannenbasis (35) überwacht.

3. Batteriesystem (10) nach Anspruch 2, wobei das Widerstandsüberwachungssystem (42) so konfiguriert ist, dass es den Widerstand zwischen dem Niederspannungsleiter (45) und der Wannenbasis (35) überwacht.

4. Batteriesystem (10) nach einem der vorhergehenden Ansprüche, wobei der Hochspannungsleiter (41) ein Abschnitt der Sammelschiene (18, 19, 20, 21) ist.

5. Batteriesystem (10) nach einem der vorangehenden Ansprüche, wobei das Batteriemanagementsystem (38) und die Wanne (33) mit demselben Massepotential verbunden sind, wobei das Batteriemanagementsystem (38) dazu ausgelegt ist, die Flüssigkeit (37) zwischen dem Niederspannungsleiter (45) und der Wannenbasis (35) zu erfassen.

6. Batteriesystem (10) nach einem der vorhergehenden Ansprüche, wobei die Wannenbasis (35) eine geneigte Oberfläche (46) aufweist.

7. Batteriesystem (10) nach Anspruch 6, wobei die Wannenbasis (35) mit der geneigten Oberfläche (46) mindestens ein Reservoir (47) umfasst, wobei das Batteriemanagementsystem (38) so eingerichtet ist, dass es die Flüssigkeit (37) innerhalb des Reservoirs (47) mit Hilfe des Flüssigkeitsdetektionssystems (40) erfasst.

8. Batteriesystem (10) nach Anspruch 7, wobei das zweite Ende (41b) des Hochspannungsleiters (41) und das zweite Ende (45b) des Niederspannungsleiters (45) innerhalb des Reservoirs (47) angeordnet sind, wobei das zweite Ende (45b) des Niederspannungsleiters (45) zwischen dem zweiten Ende (41b) des Hochspannungsleiters (41) und einer Reservoirbasis (48) angeordnet ist.

9. Batteriesystem (10) nach Anspruch 7 oder 8, wobei das Reservoir (47) mindestens eine optisch detektierbare Oberfläche aufweist.

10. Batteriesystem (10) nach einem der Ansprüche 7 bis 9, wobei das Reservoir (47) einen Ablassstopfen aufweist.

11. Verfahren (S) zur Leckagedetektion in einem Batteriesystem (10), das die folgenden Schritte umfasst:
I. (S1) Bereitstellen des Batteriesystems (10), das Folgendes umfasst:
(i) ein Gehäuse (11), das einen Gehäuserahmen (12a) und einen Basisrahmen (12b) umfasst, wobei der Gehäuserahmen (12a) und der Basisrahmen (12b) einen Gehäuseraum (13) umschließen;
(ii) ein Kühlsystem (28) mit einer Kühlflüssigkeit (29);
(iii) mindestens ein Batteriemodul (M1, M2, M3), das eine Vielzahl von Batteriezellen (14, 15, 16) umfasst, die über eine Sammelschiene (18, 19, 20, 21) elektrisch miteinander verbunden sind, wobei das Batteriemodul (M1, M2, M3) in dem Gehäuseraum (13) angeordnet ist, wobei das Batteriemodul (M1, M2, M3) zum Aufnehmen der Kühlflüssigkeit (29) zur Kühlung angepasst ist;
(iv) mindestens eine Wane (33), die einen Wannenrahmen(34) und eine Wannenbasis (35) umfasst; und
(v) ein Flüssigkeitsdetektionssystem (40), das in ein Batteriemanagementsystem (38) integriert ist, wobei das Batteriemanagementsystem (38) geeignet ist, eine Flüssigkeit (37) innerhalb der Wanne (33) mittels des Flüssigkeitsdetektionssystems (40) zu erfassen, wobei das Flüssigkeitsdetektionssystem (40) einen Hochspannungsleiter (41), dessen erstes Ende (41a) mit der Sammelschiene (18, 19, 20, 21) verbunden ist und dessen zweites Ende (41b) zwischen dem Basisrahmen (12b) und der Wannenbasis (35) angeordnet ist, und einen Niederspannungsleiter umfasst, dessen erstes Ende mit dem Batteriemanagementsystem verbunden ist und dessen zweites Ende zwischen dem zweiten Ende des Hochspannungsleiters und der Wannenbasis angeordnet ist;
II. (S2) Überwachen eines Rückgangs der Kühlflüssigkeit (29) innerhalb des Kühlsystems (28) mittels des Batteriemanagementsystems (38);
III. (S3) Überwachen eines Anstiegs der Flüssigkeit (37) im Inneren der Wanne (33) mit Hilfe des Batteriemanagementsystems (38);
IV. (S4) Vergleichen des Rückgangs der Kühlflüssigkeit (29) im Kühlsystem (28) mit dem Anstieg der Flüssigkeit (37) in der Wanne (33) mit Hilfe des Batteriemanagementsystems (38); und
V. (S5) Überprüfen, ob die Flüssigkeit (37) im Inneren der Wanne (33) die Kühlflüssigkeit (29) ist, wenn der Rückgang der Kühlflüssigkeit (29) im Inneren des Kühlsystems (28) dem Anstieg der Flüssigkeit (37) im Inneren der Wanne (33) entspricht, durch das Batteriemanagementsystem (38).

12. Verfahren (S) nach Anspruch 11, wobei der Schritt (S3) zum Überwachen des Anstiegs der Flüssigkeit (37) im Inneren der Wanne (33) einen ersten Teilschritt (S3a) umfasst, in dem der Niederspannungsleiter (45) bei einer Detektion der Flüssigkeit (37) im Inneren der Wanne (33) ein erstes Signal an das Batteriemanagementsystem (38) sendet.

13. Verfahren (S) nach Anspruch 11 oder 12, wobei der Schritt (S3) zum Überwachen des Anstiegs der Flüssigkeit (37) im Inneren der Wanne (33) einen zweiten Teilschritt (S3b) umfasst, bei dem der Hochspannungsleiter (4 1) bei einer Detektion der Flüssigkeit (37) im Inneren der Wanne (33) ein zweites Signal an das Batteriemanagementsystem (38) sendet.

14. Fahrzeug, umfassend mindestens ein Batteriesystem (10) nach einem der Ansprüche 1 bis 10.

## Revendications

1. Système de batterie (10) comprenant :
(i) un logement (11) comprenant un cadre de logement (12a) et un cadre de base (12b), dans lequel le cadre de logement (12a) et le cadre de base (12b) entourent un espace de logement (13) ;
(ii) au moins un module de batterie (M1, M2, M3) comprenant une pluralité de cellules de batterie (14, 15, 16) connectées électriquement les unes aux autres au moyen d'une barre omnibus (18, 19, 20, 21), dans lequel le module de batterie (M1, M2, M3) est disposé dans l'espace de logement (13) ;
(iii) au moins un bac (33) comprenant un cadre de bac (34) et une base de bac (35) ; et
(iv) un système de détection de liquide (40) intégré à un système de gestion de batterie (38), dans lequel le système de gestion de batterie (38) est adapté pour détecter un liquide (37) à l'intérieur du bac (33) au moyen du système de détection de liquide (40), dans lequel le système de détection de liquide (40) comprend un conducteur haute tension (41), dont la première extrémité (41a) est connectée à la barre omnibus (18, 19, 20, 21) et dont la deuxième extrémité (41b) est disposée entre le cadre de base (12b) et la base de bac (35)
**caractérisé en ce que** le système de détection de liquide (40) comprend en outre un conducteur basse tension (45), dont la première extrémité (45a) est connectée au système de gestion de batterie (38) et dont la deuxième extrémité (45b) est disposée entre la deuxième extrémité (41b) du conducteur haute tension (41) et la base de bac (35).

2. Système de batterie (10) selon la revendication 1, dans lequel le système de détection de liquide (40) comprend un système de surveillance de résistance (42) configuré pour surveiller une résistance entre le conducteur haute tension (41) et la base de bac (35).

3. Système de batterie (10) selon la revendication 2, dans lequel le système de surveillance de résistance (42) est configuré pour surveiller une résistance entre le conducteur basse tension (45) et la base de bac (35).

4. Système de batterie (10) selon l'une quelconque des revendications précédentes, dans lequel le conducteur haute tension (41) est une partie de la barre omnibus (18, 19, 20, 21) .

5. Système de batterie (10) selon l'une quelconque des revendications précédentes, dans lequel le système de gestion de batterie (38) et le bac (33) sont connectés au même potentiel de masse, dans lequel le système de gestion de batterie (38) est adapté pour détecter le liquide (37) entre le conducteur basse tension (45) et la base de bac (35) .

6. Système de batterie (10) selon l'une quelconque des revendications précédentes, dans lequel la base de bac (35) comprend une surface inclinée (46).

7. Système de batterie (10) selon la revendication 6, dans lequel la base de bac (35) avec la surface inclinée (46) comprend au moins un réservoir (47), dans lequel le système de gestion de batterie (38) est adapté pour détecter le liquide (37) à l'intérieur du réservoir (47) au moyen du système de détection de liquide (40).

8. Système de batterie (10) selon la revendication 7, dans lequel la deuxième extrémité (41b) du conducteur haute tension (41) et la deuxième extrémité (45b) du conducteur basse tension (45) sont disposées à l'intérieur du réservoir (47), dans lequel la deuxième extrémité (45b) du conducteur basse tension (45) est disposée entre la deuxième extrémité (41b) du conducteur haute tension (41) et une base de réservoir (48).

9. Système de batterie (10) selon les revendications 7 ou 8, dans lequel le réservoir (47) comprend au moins une surface optiquement détectable.

10. Système de batterie (10) selon l'une quelconque des revendications 7 à 9, dans lequel le réservoir (47) comprend un bouchon de vidange.

11. Procédé (S) de détection de fuite à l'intérieur d'un système de batterie (10) comprenant les étapes suivantes consistant à :
I. (S1) fournir le système de batterie (10) comprenant :
(i) un logement (11) comprenant un cadre de logement (12a) et un cadre de base (12b), dans lequel le cadre de logement (12a) et le cadre de base (12b) entourent un espace de logement (13) ;
(ii) un système de refroidissement (28) ayant un liquide de refroidissement (29) ;
(iii) au moins un module de batterie (M1, M2, M3) comprenant une pluralité de cellules de batterie (14, 15, 16) connectées électriquement les unes aux autres au moyen d'une barre omnibus (18, 19, 20, 21), dans lequel le module de batterie (M1, M2, M3) est disposé dans l'espace de logement (13), dans lequel le module de batterie (M1, M2, M3) est adapté pour recevoir le liquide de refroidissement (29) pour un refroidissement ;
(iv) au moins un bac (33) comprenant un cadre de bac (34) et une base de bac (35) ; et
(v) un système de détection de liquide (40) intégré à un système de gestion de batterie (38), dans lequel le système de gestion de batterie (38) est adapté pour détecter un liquide (37) à l'intérieur du bac (33) au moyen du système de détection de liquide (40), dans lequel le système de détection de liquide (40) comprend un conducteur haute tension (41), dont la première extrémité (41a) est connectée à la barre omnibus (18, 19, 20, 21) et dont la deuxième extrémité (41b) est disposée entre le cadre de base (12b) et la base de bac (35) ; et un conducteur basse tension, dont la première extrémité est connectée au système de gestion de batterie et dont la deuxième extrémité est disposée entre la deuxième extrémité du conducteur haute tension et la base de bac ;
II. (S2) surveiller une baisse du liquide de refroidissement (29) à l'intérieur du système de refroidissement (28) au moyen du système de gestion de batterie (38) ;
III. (S3) surveiller une augmentation du liquide (37) à l'intérieur du bac (33) au moyen du système de gestion de batterie (38) ;
IV. (S4) comparer la baisse du liquide de refroidissement (29) à l'intérieur du système de refroidissement (28) avec l'augmentation du liquide (37) à l'intérieur du bac (33) au moyen du système de gestion de batterie (38) ; et
V. (S5) vérifier que le liquide (37) à l'intérieur du bac (33) est le liquide de refroidissement (29), si la baisse du liquide de refroidissement (29) à l'intérieur du système de refroidissement (28) correspond à l'augmentation du liquide (37) à l'intérieur du bac (33) au moyen du système de gestion de batterie (38).

12. Procédé (S) selon la revendication 11, dans lequel l'étape (S3) de surveillance de l'augmentation du liquide (37) à l'intérieur du bac (33) comporte une première sous-étape (S3a), dans laquelle le conducteur basse tension (45) envoie un premier signal au système de gestion de batterie (38) lors d'une détection du liquide (37) à l'intérieur du bac (33).

13. Procédé (S) selon les revendications 11 ou 12, dans lequel l'étape (S3) de surveillance de l'augmentation du liquide (37) à l'intérieur du bac (33) comporte une deuxième sous-étape (S3b), dans laquelle le conducteur haute tension (41) envoie un deuxième signal au système de gestion de batterie (38) lors d'une détection du liquide (37) à l'intérieur du bac (33).

14. Véhicule comportant au moins un système de batterie (10) selon l'une quelconque des revendications 1 à 10.
